# EUROPEAN PATENT APPLICATION

(11) **EP 1 447 733 A1**
(43) Date of publication of application: **18.08.2004**
(21) Application number: 03290384.1
(22) Date of filing: 17.02.2003
(51) Int. Cl.: G06F 1/00

(54) **Data processing system and method**

(71) Applicant: Hewlett-Packard Development Company, L.P., Houston, TX 77070 (US)
(72) Inventor: Stephan, Yann, 38130 Echirolles (FR); Neuman, Paul, 38640 Claix (FR)
(74) Representative: Lloyd, Richard Graham

(57) **Abstract**

Embodiments of the present invention relate to a data processing system and method having or providing BIOS protection. BIOS code is delivered in a secure package that can only be decrypted using an appropriate flasher. The flasher extracts a key from the package that is used to provide evidence to SMM code that the secure package is authentic and that the flasher should be allowed to access a flash BIOS memory to write the BIOS code contained within the secure package to the BIOS memory.

## Description

### Field of the Invention

The present invention relates to a data processing system and method and, more particularly, to such a system and method for BIOS protection.

### Background to the Invention

Modern computers conventionally have a BIOS that is stored using flash memory. This has the advantage that it is relatively straightforward to change or update the BIOS as a BIOS manufacturer releases new versions of the BIOS code. Typically, access to the flash BIOS is gained via GPIO lines of an I/O controller hub. Such a hub is available from Intel. One of the lines is connected to a write enable/disable pin of the flash BIOS and is used, according to its state, to allow software to write to the flash BIOS.

While such access is clearly desirable to allow a computer system to use the most recent BIOS code, it presents several threats. Firstly, computer viruses such as, for example, the family of CIH viruses, which viruses include Win32/CIH etc., are designed to corrupt the BIOS code stored by the flash memory. Any such corruption is undesirable as it may render the computer system unusable. Secondly, the mechanism by which the flash BIOS is accessed is largely dependent upon the design of the motherboard and, in particular, the chipsets used to realise the motherboard.

Still further, the installation of a new BIOS typically requires a relatively sophisticated understanding of the architecture and operation of computer systems. Failure to install a new BIOS correctly can lead to a computer system being rendered unusable. An unsuccessful BIOS installation might result from an incorrect flasher utility or incorrect BIOS code being used. Such errors have relatively serious cost and technical support implications, which, in the case of maintenance contracts, can affect undesirably the viability of such contracts. Such an understanding is beyond the technical capability of all but the most sophisticated computer users. The technical complexity of the conventional techniques of protecting the flash BIOS using, for example, GPIO requires strong BIOS customisation. This leads to increased development costs and reduced manufacturing flexibility.

It is an object of embodiments of the present invention at least to mitigate some of the problems of the prior art.

### Summary of Invention

Accordingly, a first aspect of embodiments of the present invention provides a data processing system comprising a processor, a programmable memory, a controller for controlling access to the programmable memory according to the state of a software programmable indicator contained within the controller and for generating an interrupt in response to receipt of an instruction to change the state of the indicator, and an uninterruptable software routine that is invoked in response to the generation of the interrupt; the uninterruptable routine having means to determine whether first software is authorised to write data to the programmable memory and to change the state of the software programmable indicator to allow the first software to write to the programmable memory according to the determination; the data being contained within a secure package; the first software comprising means to validate the secure package in preparation for writing the data to the programmable memory and the uninterruptable routine comprising means arranged to determine, using a code associated with the secure package, whether data should be written to the programmable memory.

Advantageously, external software, such as user software or malicious software, in a form of a virus, cannot, without having an appropriate code or key, gain access to the BIOS. Furthermore, the user of the computer system is relieved of the need to have a relatively sophisticated understanding of the architecture and operation of computer systems when updating a BIOS of their computer system.

It will be appreciated that by invoking the uninterruptable routine using an interrupt the software will have neither the time nor the processing capacity to make any changes to a flash BIOS.

Preferably, embodiments provide a data processing system in which the data comprises program instructions. Preferably, the program instructions comprise at least one of BIOS code and Boot Block code.

Maintaining the security or integrity of the BIOS package is desirable. Suitably, embodiments provide a data processing system in which the package is encrypted using an encryption key and the means to validate comprises means to decrypt the secure package using a corresponding decryption key.

Preferred embodiments provide a data processing system in which the package comprises a certificate comprising data associated with an originator of the package and the means to validate comprises means to check the authenticity of the certificate. Preferably, embodiments provide a data processing system in which the secure package is signed using a digital signature and the means to validate comprises means to read and verify the digital signature.

Embodiments provide a data processing system in which the package comprises at least one installation rule for influencing the writing of the data to the programmable memory and the first software comprises means to give effect to the at least one installation rule. Preferably, the installation rule comprises data identifying a condition precedent to be satisfied prior to writing the data to the programmable memory. Preferred embodiments provide a data processing system in which the condition precedent is the writing to the programmable memory of further data. Preferably, the further data is at least a portion of second BIOS code.

Preferred embodiments provide a data processing system in which the interrupt is a SMI interrupt and the uninterruptable routine is system management mode code. Advantageously, using the SMI interrupt causes the processor to enter a protected operating environment in which the execution of all software is halted but for code contained within the protected environment.

Embodiments provide a data processing system further comprising a first access code stored within a predetermined memory location accessible by the uninterruptable routine but not by any other software, means for receiving a second access code associated with, or from, the first software; and in which the uninterruptable routine comprises means for comparing the first and second access codes to determine if the first software is authorised to access the programmable memory, and means for allowing or preventing access to the programmable memory according to the determination. Advantageously, access to the flash BIOS will not be granted unless the external software provides the appropriate code. There is also little inherent security risk in having an embedded code since external software cannot access the SMRAM, that is, the protected environment presented by a system management mode of a processor.

Preferably, the programmable memory is a programmable BIOS ROM, such as, for example, a flash BIOS ROM or other programmable device.

Preferred embodiments provide a data processing system in which the uninterruptable routine cannot be invoked by an operating system or other software.

Embodiments provide a data processing system comprising a processor, a programmable memory and an uninterruptable routine that is invoked, by an access controller, in response to an attempt by first software to modify the status of a write protection indicator associated with the programmable memory; the uninterruptable routine having means to determine whether the first software is authorised to modify the status of the write protection indicator; and to prevent access to the programmable flash memory if the uninterruptable routine determines that the first software is not authorised to modify the status of the write protection indicator associated with the programmable memory.

A second aspect of embodiments of the present invention provides a method of programming a programmable device with program code; the method comprising the steps of decrypting a secure package comprising at least the program code and an identification key; comparing the identification key with a further identification key stored within a protected environment; and controlling access to the programmable device according to the comparison to allow first software to write the program code to the programmable device or to prevent the first software writing the program code to the programmable device.

Preferably, embodiments provide a method in which the step of comparing comprises the step of passing the identification key to the protected environment as an interrupt parameter. The step of passing may comprise the step of generating a system management mode interrupt.

A further aspect of embodiments of the present invention provides a computer program element comprising computer executable program code means for implementing a system or method as described in this specification. The term *"computer program element"* comprises the whole, or a part, of a computer program, which is executable alone or in conjunction with another computer program. Preferably, embodiments provide a computer program product comprising computer readable storage or a computer readable storage medium having stored therein or thereon such a computer program element.

### Brief Description of the Drawings

Embodiments of the present invention will now be described, by way of example only, with reference to the accompanying drawings in which:
figure 1 illustrates a computer system;
figure 2 depicts a BIOS package according to an embodiment;
figure 3 shows a first embodiment of the present invention with flash BIOS write disabled; and
figure 4 illustrates the first embodiment of the present invention with flash BIOS write enabled.

### Description of Preferred Embodiments

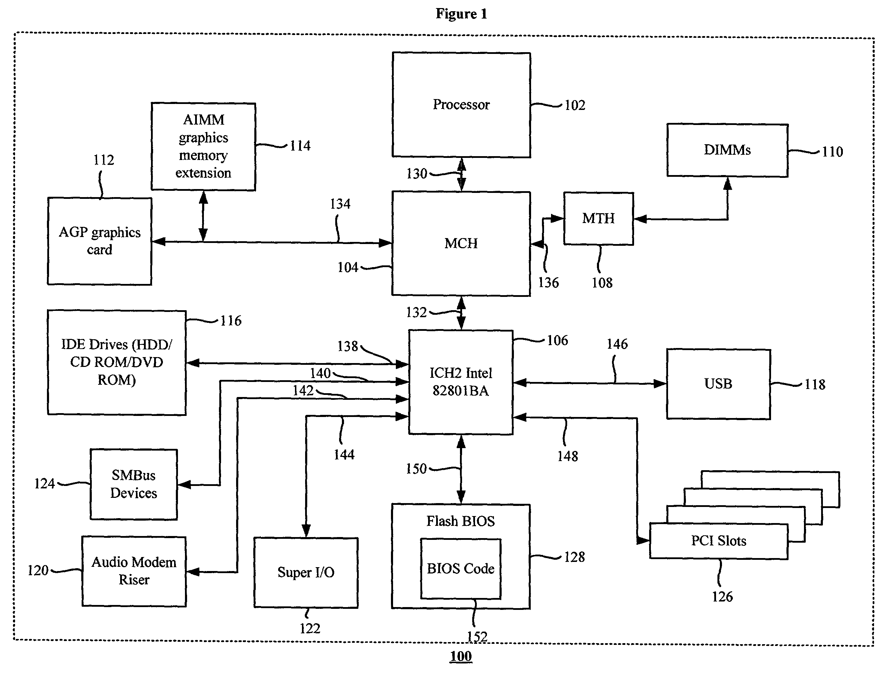

Referring to figure 1, there is shown, schematically, a computer system 100. The computer system 100 comprises a processor 102, a memory controller hub (MCH) 104, an I/O controller hub (ICH2) 106, a memory translator hub (MTH) 108, which maps to DIMMs 110 to provide system RAM. The computer system 100 also comprises graphics facilities in the form of an AGP graphics card 112 and, optionally, an AIMM graphics memory extension slot 114. A number of IDE drives 116, such as for example, a HDD/CD ROM/DVD ROM, may be provided. A USB port 118 may also be provided. The computer system 100 additionally comprises an audio modem riser (AMR) 120, a Super I/O 122, SMBus devices 124, various PCI slots 126, which can be used to host various cards such as communication cards, network cards, ISA bridges on an ISA extension, and a flash BIOS 128. The processor 102 may be an Intel processor such as, for example, a Pentium III processor, a Pentium IV processor or any other processor with a comparable system management mode of operation. It will be appreciated that the system management mode (SMM) of operation represents a protected environment.

The MCH 104 includes a processor interface 130, an I/O interface 132, an AGP interface 134 and an SRAM interface 136.

The ICH2 106 is the Input/Output controller hub for the input-output system, which integrates many of the functions required by modem PC platforms. The ICH2 106 may be realised using an Intel 82801BA I/O Controller Hub. The data sheet for such an I/O controller hub is available from Intel and is incorporated herein by reference for all purposes.

The MTH 108 allows the processor 102 to support or interact with DIMM (SDRAM) type memory 110.

The ICH2 106 comprises a number of interfaces, which include an IDE drive interface 138, an SMBus devices interface 140, an AMR interface 142 as well as a Super I/O LPC interface 144. A USB interface 146 and a PCI interface 148 are also provided. The ICH2 106 also has a flash BIOS interface 150.

The flash BIOS interface 150 is used to access the flash BIOS 128, for example, to enable BIOS code 152 to be modified. In preferred embodiments, the interface 150 between the ICH2 106 and the flash BIOS 128 is realised using a Low Pin Count bus. Access to the flash BIOS 128 is controlled using the LPC interface bridge registers (D31-F0) and, more particularly, BIOS_CNTL (LPC I/F-D31:F0). The BIOS Lock Enable (BIOSLE), in conjunction with the BIOS Write Enable (BIOSWE), having been appropriately set, allow or prevent access to the flash BIOS 128.

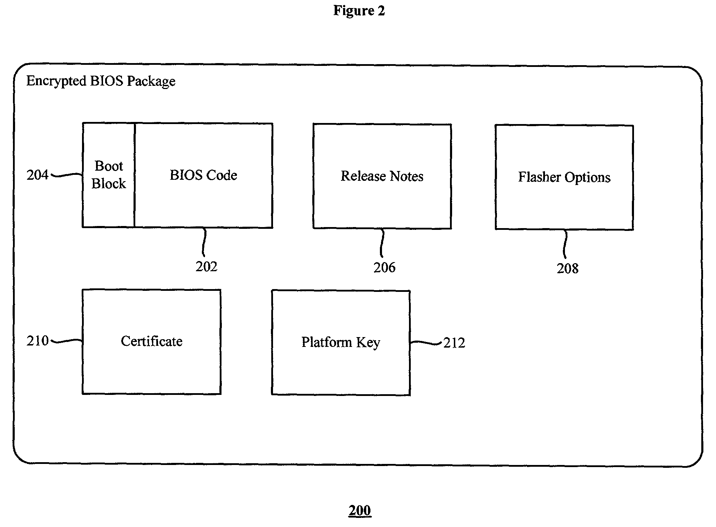

Figure 2 shows a BIOS package 200 according to an embodiment. The BIOS package is a secure package, that is, tampering with the package would be evident from validation of the package. The tamper-proof nature of the BIOS package 200 can be realised, in preferred embodiments, by encrypting the BIOS package. The BIOS package might be encrypted using any suitable encryption algorithm. The BIOS package 200 contains data representing BIOS code 202 to be flashed into the flash BIOS 128. The BIOS code 202 may represent a complete BIOS or only that part of BIOS code needed for the update. Preferably, the BIOS code 202 has an associated Boot Block 204, which is a small portion of code used to boot the computer system in the event of a corrupted or incorrectly installed BIOS.

Preferably, the BIOS package 200 also comprises release notes 206, which describe the nature of the changes effected by the BIOS code 202 once installed. Optionally, the BIOS package 200 might comprise flasher utility options 208 that influence the nature of the installation of the BIOS code 202. The influence exerted by the flasher utility options 208 may include checking to ensure that any condition precedents have been satisfied before installing the BIOS code 202. The condition precedents, in preferred embodiments, include ensuring that any BIOS updates necessary to ensure the correct operation of the BIOS code 202, once installed, have been performed.

A certificate 210 is preferably provided to certify the BIOS package as being authentic, that is, to certify the BIOS package 200 as originating from a trusted source.

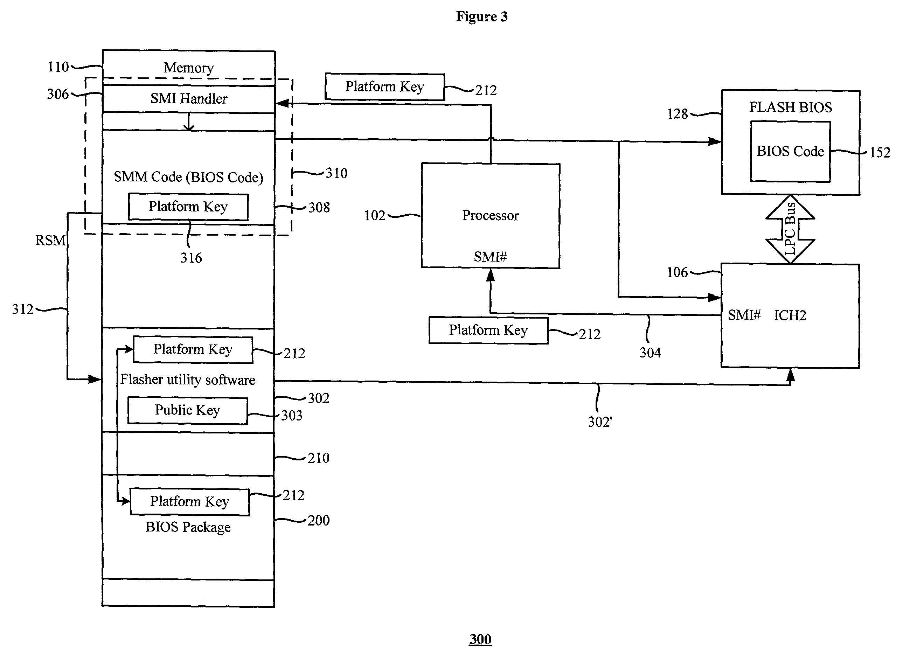

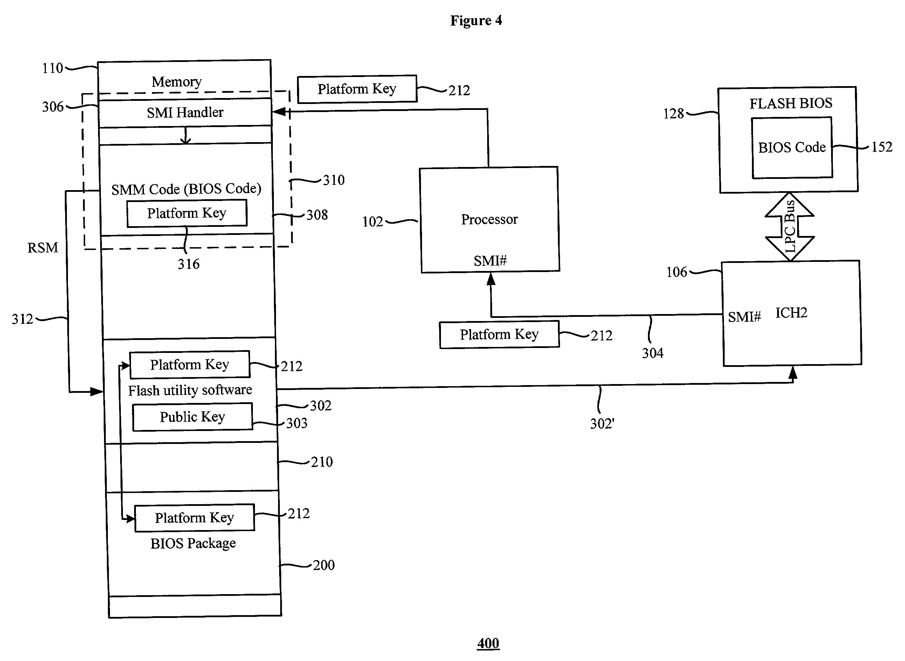

The BIOS package 200 comprises a platform key 212. The platform key 212 is used to authenticate the BIOS package to an SMM interrupt service routine, described later with reference to figures 3 and 4. Preferably, the platform key is unique to the particular computer system 100 or to the particular type of computer system. Presenting the platform key to the SMM interrupt service routine allows the latter to make a judgment as to whether or not the flasher utility should be allowed access to the flash memory 128 to install the BIOS code contained within the BIOS package.

Referring to figure 3, there is shown an interaction 300 between the ICH2 106, the flash BIOS 128, the processor 102 and the memory 110 according to an embodiment. The interaction 300 is such that if flasher utility software 302 attempts to access, or requests access to, the flash BIOS 128, by changing the status of the BIOSLE or BIOSWE within the ICH2 106, the ICH2 106 output a System Management Interrupt (SMI#) 304 to the processor 102 in response to that attempt, which prevents the operation of any write cycle to the flash memory 128 via the LPC bus.

The processor 102, upon receiving the SMI interrupt 304, enters a system management mode in which the processor transfers control to an SMI handler 306. The SMI handler 306 is arranged to invoke system management code 308. The SMI handler 306 and the system management code 308 are stored and executable within a separate operating environment contained within system management RAM (SMRAM) 310. The SMM code 308 is used to determine whether or not the flasher utility software 302 has supplied a platform key 212; the platform key having been extracted from the BIOS package 200 after decryption by the flasher utility software 302 using the public key 303. The platform key 212 is used to determine whether or not the flasher utility software 302 is allowed access to the flash BIOS 128. The platform key 212 is passed to the SMI handler 306 as an interrupt parameter.

It will be appreciated that the request 302' issued by the flasher utility software 302 to the ICH2 106 to change the state of the BIOSWE bit is not sufficient to allow the flasher utility software 302 to make any changes to the BIOS code 152 or to the context of the flash BIOS 128 until the processor leaves the system management mode. This follows from the secure nature of the SMM in which the context of the processor prior to entering the SMM will have been saved and the SMM code cannot be interrupted at all, not even by a subsequent SMI.

The system management mode code 308 compares the supplied platform key 212 with an SMM platform key 316 to determine if the flasher utility software 302 is authorised to access, and to make changes to, the flash BIOS 128. If the SMM code 308 determines that the flasher utility software 302 is not authorised to access and modify the BIOS code 152, the SMM code 308 takes action to prevent the write cycle from progressing, which prevents the flasher utility software 302 from accessing the flash BIOS 128. In preferred embodiments, the SMM code 308 re-asserts the write protection, that is, BIOSLE and BIOSWE. Once the SMM code 308 has finished executing, control is returned to the flasher utility software 302 via an RSM instruction 312, which can only be executed within the system management mode and which is not accessible to the flasher utility software 302.

It can be appreciated that upon returning from the SMM, control is returned to the flasher utility software 302. However, since the SMM code 308 did not take any action to allow the write cycle to progress, the flasher utility software 302 will not have managed to access the flash BIOS 128.

The platform key 316 stored within the SMRAM 310 cannot be read in advance by user software or malicious software since the storage represented by the SMRAM 310 cannot be accessed other than via an SMI interrupt being generated and during the SMM.

Referring to figure 4, there is shown the same interaction as illustrated in figure 3 with the exception that the platform key 212 is assumed to match the SMM platform key 316. Therefore, the SMM code 308 does not take any action to prevent the progress of the write cycle, that is, the SMM code 308 does not instruct the ICH2 106 to re-assert the write protection for the flash BIOS 128. Therefore, once the RSM instruction has been executed, control is returned to the flasher utility software 302, which is then able to write to the flash BIOS 128 since the state of the BIOSLE and BIOSWE will have not have been re-asserted by the SMM code 308.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings) and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings) or to any novel one, or any novel combination, of the steps of any method or process so disclosed.

## Claims

1. A data processing system comprising a processor, a programmable memory, a controller for controlling access to the programmable memory according to the state of a software programmable indicator contained within the controller and for generating an interrupt in response to receipt of an instruction to change the state of the indicator, and an uninterruptable software routine that is invoked in response to the generation of the interrupt; the uninterruptable routine having means to determine whether first software is authorised to write data to the programmable memory and to change the state of the software programmable indicator to allow the first software to write to the programmable memory according to the determination; the data being contained within a secure package; the first software comprising means to validate the secure package in preparation for writing the data to the programmable memory and the uninterruptable routine comprising means arranged to determine, using a code associated with the secure package, whether data should be written to the programmable memory.

2. A data processing system as claimed in claim 1 in which the data comprises program instructions.

3. A data processing system as claimed in claim 2 in which the program instructions comprise at least one of BIOS code and Boot Block code.

4. A data processing system as claimed in any preceding claim in which the package is encrypted using an encryption key and the means to validate comprises means to decrypt the secure package using a corresponding decryption key.

5. A data processing system as claimed in any preceding claim in which the package comprises a certificate comprising data associated with an originator of the package and the means to validate comprises means to check the authenticity of the certificate.

6. A data processing system as claimed in any preceding claim in which the secure package is signed using a digital signature and the means to validate comprises means to read and verify the digital signature.

7. A data processing system as claimed in any preceding claim in which the package comprises at least one installation rule for influencing the writing of the data to the programmable memory and the first software comprises means to give effect to the at least one installation rule.

8. A data processing system as claimed in any preceding claim in which the installation rule comprises data identifying a condition precedent to be satisfied prior to writing the data to the programmable memory.

9. A data processing system as claimed in claim 8 in which the condition precedent is the writing to the programmable memory of further data.

10. A data processing system as claimed in claim 9 in which the further data comprises at least a portion of second BIOS code.

11. A data processing system as claimed in any preceding claim in which the interrupt is an SMI interrupt and the uninterruptable routine is system management mode code executable within a constrained or protected operating environment.

12. A data processing system as claimed in any preceding claim in which the interrupt is generated by a controller hub for controlling access to the programmable data memory.

13. A method of programming a programmable device with program code; the method comprising the steps of decrypting a secure package comprising at least the program code and an identification key; comparing the identification key with a further identification key stored within a protected environment; and controlling access to the programmable device according to the comparison to allow first software to write the program code to the programmable device or to prevent the first software writing the program code to the programmable device.

14. A method as claimed in claim 13 in which the step of comparing comprises the step of passing the identification key to the protected environment as an interrupt parameter.

15. A method as claimed in claim 14 in which the step of passing comprises the step of generating a system management mode interrupt.

16. A computer program element comprising computer executable program code means for implementing a system or method as claimed in any preceding claim.

17. A computer program product comprising computer readable storage or a computer readable storage medium having stored therein or thereon a computer program element as claimed in claim 16.
